Europäisches Patentamt

European Patent Office

Office européen des brevets

(11) Numéro de publication : **0 285 124 B1**

(12)    FASCICULE DE BREVET EUROPEEN

(45) Date de publication du fascicule du brevet :
15.05.91 Bulletin 91/20

(51) Int. Cl.⁵ : **F22D 1/50, B01D 19/00**

(21) Numéro de dépôt : **88105169.2**

(22) Date de dépôt : **30.03.88**

(54) **Dégazeur d'eau d'alimentation d'un générateur de vapeur.**

(30) Priorité : **03.04.87 FR 8704692**

(43) Date de publication de la demande :
**05.10.88 Bulletin 88/40**

(45) Mention de la délivrance du brevet :
**15.05.91 Bulletin 91/20**

(84) Etats contractants désignés :
**BE CH DE ES FR GB IT LI NL SE**

(56) Documents cités :
**FR-A- 1 040 311**
**FR-A- 2 573 320**
**US-A- 2 671 524**

(73) Titulaire : **DELAS**
**12-14, rue d'Alsace**
**F-92300 Levallois-Perret (FR)**

(72) Inventeur : **Andrieux, Bernard**
**7 avenue Pierre Grenier**
**F-92100 Boulogne (FR)**
Inventeur : **Grand, Claude**
**2 Villa Chaptal**
**F-92300 Levallois Perret (FR)**

(74) Mandataire : **Weinmiller, Jürgen et al**
**Lennéstrasse 9 Postfach 24**
**W-8133 Feldafing (DE)**

EP 0 285 124 B1

## Description

La présente invention concerne un dégazeur d'eau d'alimentation d'un générateur de vapeur.

On sait que les générateurs de vapeur des centrales électriques notamment doivent fonctionner avec une eau alimentaire convenablement réchauffée et ne contenant qu'une très faible quantité d'oxygène dissous. Aussi, utilise-t-on un appareil appelé communément dégazeur qui est alimenté en eau d'extraction du condenseur à travers des réchauffeurs basse pression et qui assure essentiellement trois fonctions :

– dégazage et réchauffage de l'eau, cette fonction étant assurée par de la vapeur prélevée par un soutirage de la turbine ;

– réserve de l'eau dégazée dans une bâche de grande dimension, ce qui permet d'absorber les fluctuations de débit du circuit ;

– alimentation des pompes alimentaires avec une hauteur de charge suffisante pour tous les régimes de fonctionnement.

L'appareil est ainsi placé à une assez grande hauteur dans la salle des machines.

On connaît principalement deux modes de réalisation dans lesquels le dégazage est obtenu par le réchauffage du liquide à dégazer.

En effet, on sait que lorsqu'un volume de liquide est en équilibre avec sa vapeur et avec des gaz incondensables, la quantité d'incondensables dissous dans le liquide est proportionnelle à un coefficient de solubilité des incondensables dans le liquide et à la pression partielle des incondensables dans la phase gazeuse totale (vapeur et incondensable) en contact avec le liquide. Si donc, on porte la masse du liquide à une température pour laquelle sa pression de vapeur saturante est égale justement à la pression totale (vapeur et incondensables) régnant dans la phase gazeuse au-dessus du liquide, et que cette pression totale reste constante, la pression partielle des incondensables sera donc nulle et donc aussi la teneur en incondensables dissous dans le liquide. Pour cela, il est évidemment nécessaire que la pression totale reste constante et de permettre l'échappement des incondensables hors de l'enceinte du dispositif. Il s'agit donc de porter la masse du liquide à la température de saturation qui correspond à la pression régnant dans l'enceinte au-dessus du liquide.

Une première réalisation connue, appliquant ce principe, comporte une enceinte unique contenant une masse de liquide ; au-dessus de la surface liquide est prévue une arrivée de vapeur de réchauffage, saturée ou surchauffée, exempte d'incondensable, cette vapeur étant injectée dans la masse du liquide par des tuyauteries plongeantes percées à leur extrémité inférieure, l'eau à dégazer est introduite par le haut, par une tuyère de pulvérisation et les incondensables sont évacués au voisinage de cette tuyère vers une enceinte à une pression inférieure à celle du dégazeur. Voir par exemple le brevet français 2 176 157.

Dans une seconde réalisation connue, l'appareil comprend deux enceintes distinctes, toutes deux soumises à la pression de la vapeur, constituant, l'une un réservoir de stockage et l'autre, située au-dessus, le dégazeur proprement dit, reliées l'une à l'autre par des tuyauteries d'évacuation d'eau et d'équilibrage de vapeur. De la vapeur de réchauffage, exempte d'incondensables, est envoyée dans l'enceinte supérieure et est canalisée vers des tuyères de pulvérisation d'arrivée d'eau à dégazer. L'ensemble comporte des pots de barbotage et des plateaux crépinés. Les incondensables sont évacués au voisinage des tuyères d'arrivée d'eau. L'ensemble comprend également un dispositif de répartition de l'eau réchauffée et dégazée à l'intérieur de la masse du réservoir de stockage.

Le principal inconvénient du premier mode de réalisation connu, consiste en ce qu'en cas de baisse, plus ou moins brutale de la pression de vapeur, le liquide remonte dans les tuyauteries plongeantes puis dans les collecteurs et alimentent à l'envers la source de vapeur. Dans le cas d'une vapeur de soutirage, il peut en résulter des dommages graves à la turbine. Pour éviter ce risque, on installe des clapets de non retour, mais la sécurité n'est pas absolue. En outre le réchauffage de l'eau est inférieur à celui qui peut être réalisé avec le second mode de réalisation, du fait de la perte de charge de la vapeur dans les collecteurs et tuyauteries et de la hauteur d'eau à vaincre. Il en résulte une perte de plusieurs dizièmes de °C, donc une baisse du rendement de l'installation. Par ailleurs, les collecteurs et tuyauteries, souvent alimentés en vapeur surchauffée, sont de conception délicate et peuvent conduire à des détériorations en service.

Dans le second mode de réalisation, on n'a pas cet inconvénient mais on a deux enceintes distinctes dont les fonctions sont séparées d'où un encombrement très important et un poids généralement supérieur, les deux enceintes étant calculées pour supporter la pression de la vapeur de réchauffage. Le coût est élevé et le montage sur le site est relativement complexe puisque la bâche de stockage, en un ou plusieurs éléments, et l'enceinte de dégazage doivent être livrés séparément et mis en place à une assez grande hauteur au moyen de grues.

Il a alors été proposé dans le document FR-A-2 573 320 un dispositif de dégazage installé dans une enveloppe unique, et comprenant une série de plateaux crépinés recevant l'eau à dégazer et assurant la dispersion du liquide qui se déverse dans un bac central traversé par des tuyauteries crépinées alimentées en vapeur de

2

soutirage, le bac comportant des becs déverseurs par lesquels s'échappent en émulsion un mélange d'eau et de vapeur.

Ce dispositif est spécialement intéressant dans le cas où il est installé dans un puits de condenseur, et donc à faible pression, inférieure à 100 mb, mais dans le cas où il est installé dans une enceinte séparée, la réserve d'eau est relativement faible, ou bien alors il est nécessaire d'augmenter considérablement le diamètre et/ou la longueur du dispositif et donc son encombrement, ce qui va exactement à l'encontre du but recherché; par ailleurs, l'ensemble du dispositif de dégazage est relativement coûteux et compliqué puisqu'il comprend une pluralité de plateaux, de conduites avec diaphragme de détente, de becs verseurs...

La présente invention a pour but de réaliser un dégazeur qui, pour une réserve d'eau voisine de celle d'un dégazeur du type à tubes plongeants, ait un système de dégazage du genre de celui de la seconde réalisation citée ci-dessus, donc sans tubes plongeants et qui soit d'un volume et d'un poids, le plus faible possible compatible avec un système de dégazage de ce genre, voisin de ceux d'un dégazeur à tubes plongeants.

L'invention a ainsi pour objet un dégazeur d'eau d'alimentation d'un générateur de vapeur comprenant une enceinte unique contenant un dispositif de dégazage, caractérisé en ce que ladite enceinte est divisée en deux zones longitudinales dont l'une, appelée première zone, correspond à l'emplacement dudit dispositif de dégazage, ladite première zone ayant une section transversale de plus grande surface que celle de l'autre zone, appelée seconde zone, le barycentre de ladite section de ladite première zone étant décalé vers le haut par rapport à celui de ladite seconde zone, la partie supérieure de ladite première zone étant munie d'orifices d'échappement des incondensables, de tuyères de pulvérisation de l'eau à dégazer et à réchauffer, et d'une arrivée de vapeur de réchauffage, aboutissant dans une boîte de distribution de vapeur dans des couloirs longitudinaux situés dans un bac allongé suspendu aux parois de ladite première zone de l'enceinte, ledit bac étant alimenté, dans une allée longitudinale centrale, par l'eau en provenance desdites tuyères, ladite eau pénétrant dans lesdits couloirs, situés de part et d'autre de ladite allée, par des orifices inférieurs des parois desdits couloirs, l'eau et la vapeur passant ensuite desdits couloirs dans des allées extérieures par des parois perforées provoquant dans ces allées extérieures un mélange de l'eau et de la vapeur se déversant enfin dans l'enceinte par les bords longitudinaux du bac sur toute sa longueur.

Selon une première réalisation, ladite seconde zone se partage en deux parties encadrant ladite première zone, les deux zones constituant une unique bâche de stockage cylindrique d'axe horizontal fermée à ses deux extrémités, dont la partie centrale comporte à sa partie supérieure une ouverture allongée sur les bords de laquelle est soudée une portion de virole cylindrique formant dôme, de diamètre inférieur à celui de ladite bâche, ladite première zone étant constituée par cette partie centrale avec sa virole.

Selon une seconde réalisation, ladite seconde zone se partage en deux parties encadrant ladite première zone, les deux zones constituant une unique bâche de stockage fermée à ses deux extrémités, ladite première zone étant constituée par un premier cylindre d'axe horizontal raccordé à ses extrémités aux deux parties de ladite seconde zone constituées par un second et un troisième cylindres coaxiaux et de même diamètre, inférieur au diamètre dudit premier cylindre, la génératrice inférieure des trois cylindres étant sensiblement commune.

On va maintenant donner la description d'un exemple particulier de mise en oeuvre de l'invention en se référant au dessin annexé dans lequel :

– La figure 1 est une vue montrant en élévation un dégazeur selon l'invention ;

– La figure 2 est une vue de gauche de la figure 1 ;

– La figure 3 est une vue partielle, agrandie, en coupe axiale du dégazeur de la figure 1 ;

– La figure 4 est une vue en coupe selon IV-IV de la figure 1 ou de la figure 3 ;

– La figure 5 est une vue en coupe selon V-V de la figure 1 ou de la figure 3.

– La figure 6 est une vue montrant en élévation une variante préférée d'un dégazeur selon l'invention.

– La figure 7 est une vue de gauche de la figure 6.

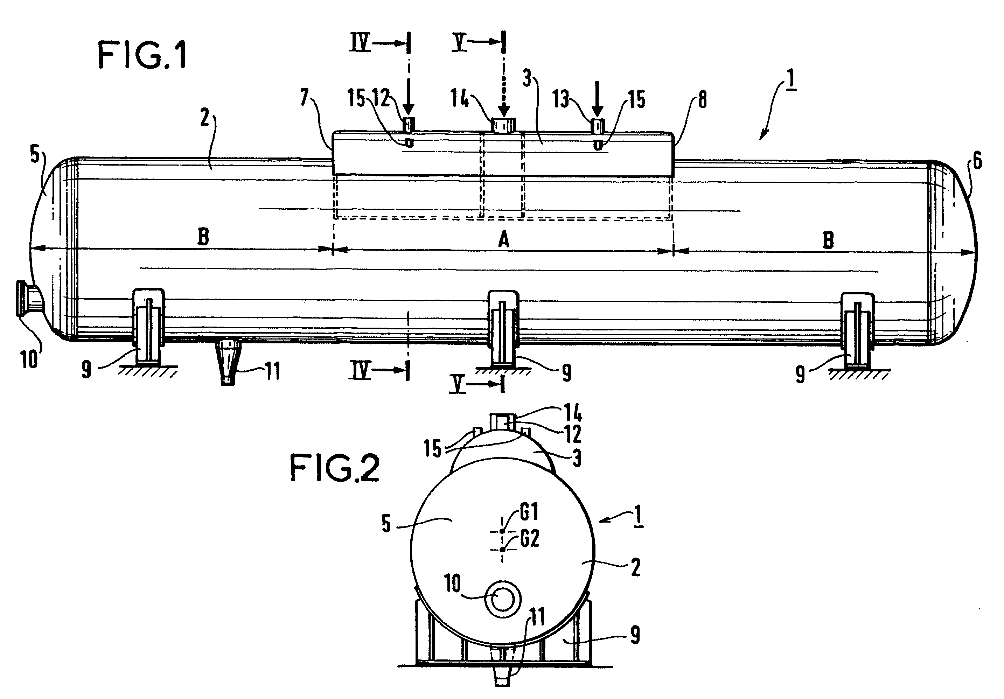

Les figures 1 et 2 montrent donc en élévation et vue de gauche un dégazeur d'eau d'alimentation d'un générateur de vapeur pour une centrale électrique.

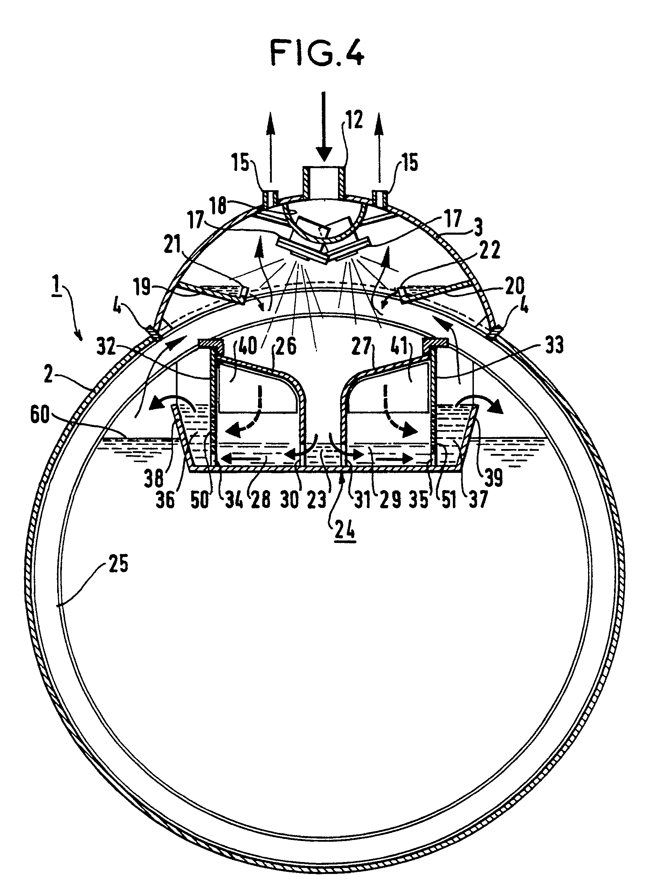

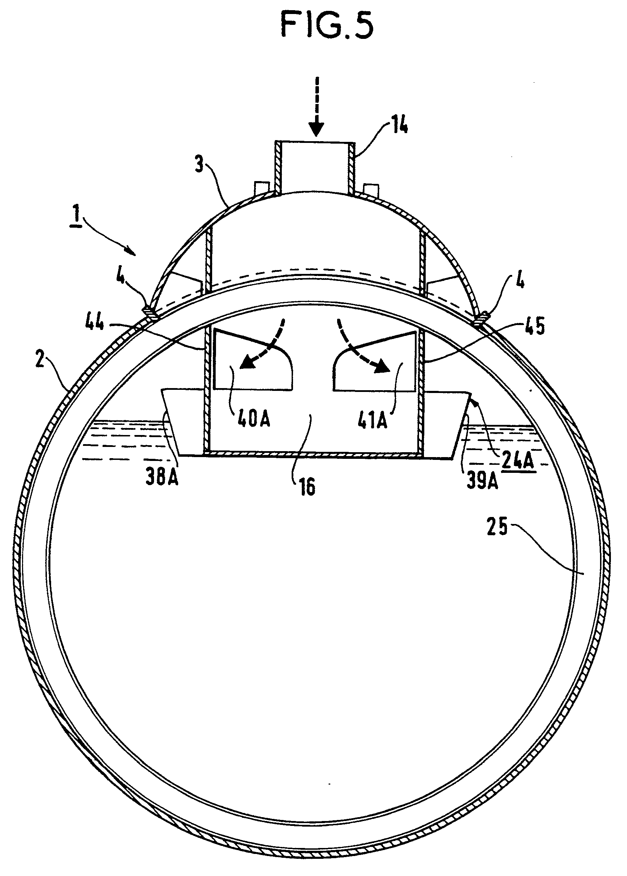

Ce dégazeur comprend une enceinte unique 1 formée d'une bâche 2 de stockage de l'eau dégazée, cylindrique, d'axe horizontal, et d'une portion de virole 3 cylindrique formant dôme, soudée, par l'intermédiaire de fers de liaison, plats 4 (figures 4 et 5), sur les bords d'une ouverture allongée pratiquée à la partie supérieure de la bâche 2.

La bâche 2 est fermée par des fonds arrondis 5 et 6 et la virole 3 est fermée par des fonds 7 et 8 plats, formant ainsi une enveloppe ou enceinte 1 fermée.

Cette enceinte 1 est ainsi divisée en deux zones longitudinales : une première zone centrale A, celle qui comprend la virole 3 et une seconde zone B qui se partage en deux parties qui encadrent la première zone. Comme on le voit aisément sur les figures 1 et 2, une section transversale effectuée dans la première zone A a une plus grande surface qu'une section transversale effectuée dans la seconde zone B. En outre, le bary-

EP 0 285 124 B1

centré $G_1$ d'une section transversale effectuée dans la première zone A est décalé vers le haut par rapport au barycentre $G_2$ d'une section transversale effectuée dans la deuxième zone B.

La virole 3 a un diamètre inférieur à celui de la bâche 2 et sa portion couvre une étendue circonférentielle inférieure à son diamètre.

L'ensemble du dégazeur est supporté par des supports 9. La bâche 2 de stockage de l'eau dégazée comprend un trou d'homme 10 pour la visite de la bâche et une sortie 11 destinée à être raccordée à une conduite d'extraction.

La partie supérieure de la virole 3 porte deux ouvertures 12 et 13 pour l'alimentation du dégazeur en eau à dégazer, une ouverture 14 pour l'alimentation du dispositif en vapeur provenant d'un soutirage à la turbine et destinée au réchauffage et au dégazage de l'eau à traiter.

La virole 3 comprend en outre des orifices 15 pour l'évacuation des incondensables.

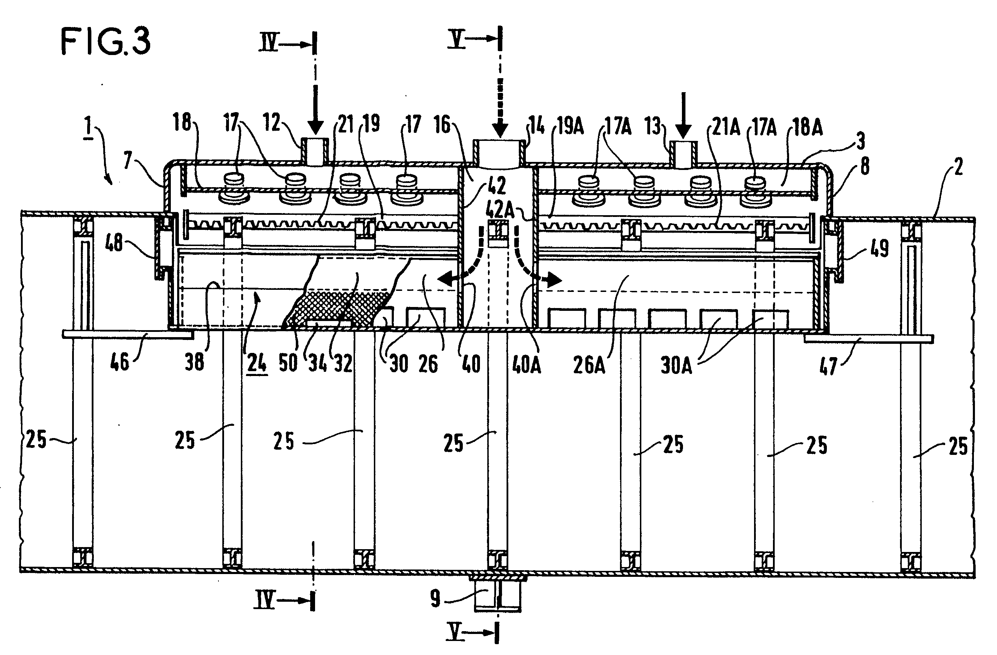

En se référant maintenant aux figures 3, 4 et 5, on va décrire l'intérieur du dégazeur.

L'intérieur de l'enceinte 1 comprend essentiellement un dispositif de dégazage situé à l'intérieur de la virole 3 donc dans la première zone et à la partie supérieure de la bâche 2 sur toute la longueur de la virole 3. Le reste de l'enceinte, constitué par la majeure partie de la bâche 2 constitue une réserve 60 de l'eau dégazée.

En réalité, dans l'exemple décrit, l'enceinte 1 comprend deux dispositifs de dégazage, identiques, situés respectivement à droite et à gauche d'une boîte commune 16 de distribution de vapeur.

Sur le dessin, les éléments équivalents des deux dégazeurs portent les mêmes références, mais celles se rapportant au dispositif de dégazage situé à droite de la boîte de distribution commune de vapeur 16 sont affectées en outre de l'indice A.

Chaque dispositif de dégazage comprend huit tuyères de pulvérisation 17 situées à la partie supérieure de la virole 3 et fixée, à une auge 18 à laquelle aboutit l'ouverture 12 (13 pour le dégazeur de droite) d'alimentation en eau à dégazer. Deux plateaux 19 et 20 à bords déverseurs crénelés 21 et 22 recueillent une partie de l'eau pulvérisée par les tuyères et forment déflecteur. L'ensemble de l'eau provenant directement des tuyères, ou tombant des plateaux 19 et 20 aboutit dans une allée centrale longitudinale 23 d'un bac 24, en tôle, supporté par des renforts internes circulaires 25 de l'enceinte et par le dôme 3. Deux tôles pliées 26 et 27 assurent la collecte de l'eau dans l'allée centrale 23 et séparent cette allée centrale de deux couloirs longitudinaux latéraux 28 et 29 situés de part et d'autre de l'allée centrale. Les couloirs latéraux 28 et 29 sont alimentés en eau, en provenance de l'allée centrale 23 au moyen d'orifices inférieurs 30 et 31 pratiqués à la base des tôles 26 et 27 servant de parois aux couloirs 28 et 29. Du côté extérieur, opposé aux parois formées par les tôles pliées 26 et 27, les couloirs 28 et 29 sont délimités par des parois externes 32 et 33 en tôles, perforées comme le montre mieux l'arrachement de la figure 3, sur environ la moitié inférieure de leur hauteur. Ces parois externes 32 et 33 comportent en outre à leur base des orifices 34, 35 de faible hauteur. Au-delà des couloirs latéraux 28 et 29, le bac 24 comprend encore deux allées extérieures 36 et 37 limitées extérieurement par les bords longitudinaux 38 et 39 du bac 24 formant déversoir à leur extrémité supérieure.

Les couloirs longitudinaux, latéraux 28 et 29 sont alimentés en vapeur de réchauffage et de dégazage à partir de la boîte commune 16 de distribution de vapeur par des ouvertures 40 et 41 pratiquées dans les parois 42 et 42A de la boîte 16.

Des passerelles 46 et 47 suspendues aux renforts 25 permettent d'accéder aux dispositifs de dégazage dans lesquels on peut pénétrer par des trous d'homme 48 et 49.

Un certain nombre d'entretoises de renfort, non représentées sur les figures afin de ne pas nuire à la clarté du dessin, assurent la rigidité de l'ensemble.

Sur les figures, les flèches en traits continus épais indiquent la circulation de l'eau, tandis que les flèches en traits discontinus représentent la circulation de la vapeur. Ainsi, l'eau pénètre dans le dégazeur par les ouvertures 12, 13 puis est pulvérisée par les tuyères 17 et tombe dans l'allée centrale 23. De là, elle passe par les orifices 30 et 31 dans les couloirs latéraux 28 et 29 puis dans les allées extérieures 36 et 37 par les orifices 34 et 35 tandis que la vapeur située dans les couloirs latéraux 28 et 29 passe dans les allées extérieures 36 et 37 par les trous 50, 51 des parois en tôles perforées 32 et 33 où elle se mélange à l'eau par barbotage. Des allées extérieures 36 et 37, le mélange se déverse dans la bâche de stockage 2 par les bords supérieurs 38 et 39 du bac 24. Les incondensables s'évacuent, comme le montrent les flèches en traits continus fins, par les orifices 15.

Comme on le voit sur les figures, le niveau de l'eau dans la bâche de stockage peut très bien atteindre les parois latérales 38 et 39 du bac 24. Il ne doit pas cependant atteindre le bord supérieur de ces parois.

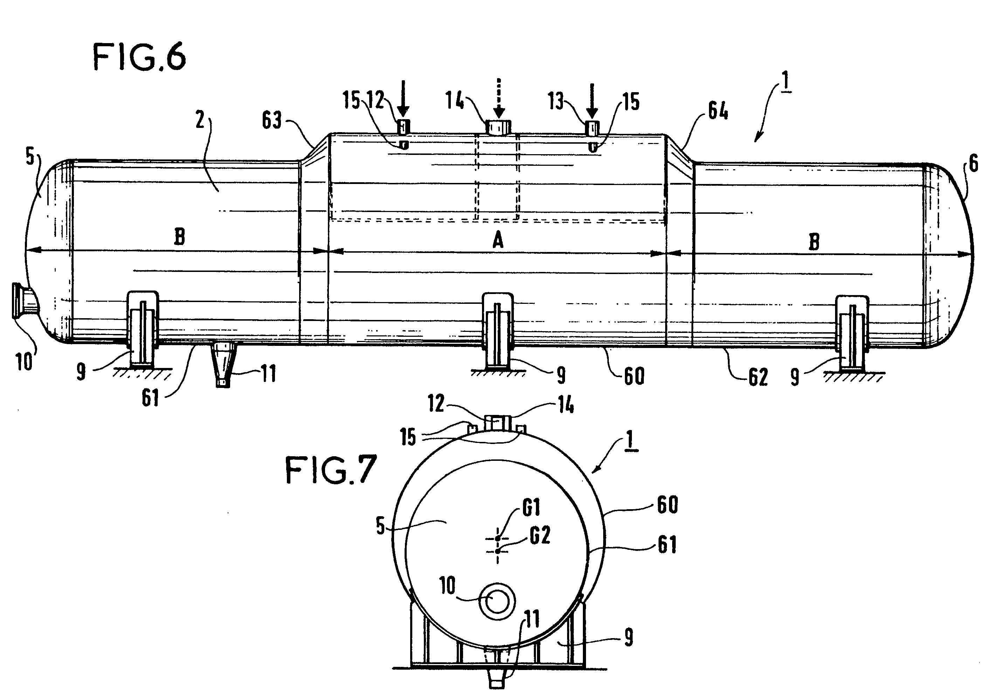

Les figures 6 et 7 représentent une variante de l'invention. Dans cette variante, la première zone, centrale, contenant le dispositif de dégazage est constituée par un premier cylindre 60 d'axe horizontal encadré par les deux parties de la seconde zone, formées d'un second cylindre 61 et d'un troisième cylindre 62. Ces second et troisième cylindres 61 et 62 portent les fonds 5 et 6, sont coaxiaux et de même diamètre. Ils sont raccordés au cylindre central 60 par des raccords soudés 63 et 64. Le cylindre central 60 de la première zone est de plus grand diamètre que celui des cylindres 61 et 62 correspondant à la seconde zone. Comme on le voit sur les figures, la génératrice inférieure des trois cylindres 60, 61 et 62 est commune, le décentrement du cylindre 60 par rapport aux cylindres 61 et 62 étant décalé vers le haut. L'ensemble des deux zones, formé des trois cylindres, forme, comme dans le premier exemple, une bâche 2 de stockage de l'eau dégazée.

Le dispositif de dégazage fixé à la partie supérieure du cylindre central 60 est identique à celui décrit dans les figures précédentes.

L'avantage de cette réalisation consiste en ce que la première zone étant constituée par un cylindre complet ne comportant pas d'ouverture longitudinale est plus résistante et nécessite moins de renforts 25.

Elle est en outre plus facilement réalisable et plus économique.

Ainsi, avec le dégazeur selon l'invention, on assure dans une enceinte unique, d'encombrement et de poids du même ordre que celui de la première réalisation décrite dans l'introduction, et pour une même capacité de stockage d'eau dégazée, la séparation des fonctions de dégazage et de stockage et ceci sans aucune possibilité de remontée d'eau vers la turbine en cas de baisse de pression de la vapeur d'alimentation du dégazeur lors d'une brusque diminution de charge de la turbine. La répartition de l'eau dans la bâche 2 ne requiert aucune disposition particulière du fait de la longueur du déversoir sur toute la longueur des bords 38 et 39 du bac 24.

A titre d'exemple particulier non limitatif on donnera ci-après les valeurs numériques d'un cas concret de dégazeur selon l'invention.

La bâche de stockage 2 a un diamètre de 3,80 m et une longueur de 20 m, capacité de 210 m³. Elle est constituée par des tôles d'acier de 22 mm d'épaisseur.

La virole 3 a un diamètre de 2,20 m et une longueur de 7 m, son épaisseur est de 22 mm.

Dans le cas de l'exemple des figures 5 et 6, le cylindre 60 a un diamètre de 4,30 m, sa longueur est de 7m et son épaisseur de 25 mm. Les cylindres 61 et 62 ont un diamètre de 3,80 m, font chacun 6,50 m de longueur et leur épaisseur est de 22 mm.

Eau à dégazer :

|  |  |  |
|---|---|---|
| – Débit | : | 1 200 tonnes/h |
| – Température | : | 131° C |
| – Teneur en oxygène | : | 2 000 PPb max. |

Vapeur de dégazage (soutirage)

|  |  |  |
|---|---|---|
| – Pression | : | 7 bars absolus |
| – Température | : | 340° C |
| – Débit correspondant au débit d'eau à dégazer | : | 72 tonnes/h |

Eau dégazée

|  |  |  |
|---|---|---|
| – Débit | : | 1 272 tonnes/h |
| – Température | : | 165° C |
| (température de saturation de la vapeur à 7 bars absolus) | | |
| – Teneur en oxygène | : | inférieure à 3 PPb |

La capacité utile de la bâche est de 175 m³.

## Revendications

1. Dégazeur d'eau d'alimentation d'un générateur de vapeur comprenant une enceinte unique (1) contenant un dispositif de dégazage, caractérisé en ce que ladite enceinte est divisée en deux zones longitudinales (A, B) dont l'une, appelée première zone (A), correspond à l'emplacement dudit dispositif de dégazage, ladite première zone (A) ayant une section transversale de plus grande surface que celle de l'autre zone, appelée seconde zone (B), le barycentre ($G_1$) de ladite section de ladite première zone étant décalée vers le haut par rapport à celui ($G_2$) de ladite seconde zone, la partie supérieure de ladite première zone étant munie d'orifices (15) d'échappement des incondensables, de tuyères (17) de pulvérisation de l'eau à dégazer et à réchauffer, et d'une arrivée (14) de vapeur de réchauffage aboutissant dans une boîte (16) de distribution de vapeur dans des couloirs longidutinaux (28, 29) situés dans un bac (24) allongé suspendu aux parois de ladite première zone (A) de l'enceinte, ledit bac (24) étant alimenté, dans une allée longitudinale central (23), par l'eau en provenance desdites tuyères (17) ladite eau pénétrant dans lesdits couloirs (28, 29) situés, de part et d'autre de ladite allée (23), par des orfices inférieurs (30, 31) des parois (26, 27) desdits couloirs, l'eau et la vapeur passant ensuite desdits couloirs (28, 29) dans des allées extérieures (36, 37) par des parois perforées (32, 33) provoquant dans ces allées extérieures un mélange de l'eau et de la vapeur se déversant enfin dans l'enceinte par les bords longitudinaux (38, 39) du bac (24) sur toute sa longueur.

2. Dégazeur selon la revendication 1, caractérisé en ce que ladite seconde zone (B) se partage en deux parties encadrant ladite première zone (A), les deux zones constituant une unique bâche de stockage (2) cylindrique d'axe horizontal, fermée à ses deux extrémités, dont la partie centrale comporte à sa partie supérieure une ouverture allongée sur les bords de laquelle est soudée une portion de virole (3) cylindrique formant dôme, de diamètre inférieur à celui de ladite bâche, ladite première zone (A) étant constituée par cette partie centrale avec sa virole (3).

3. Dégazeur selon la revendication 1, caractérisé en ce que ladite seconde zone (B) se partage en deux parties encadrant ladite première zone (A), les deux zones constituant une unique bâche de stockage (2) fermée à ses deux extrémités (5, 6), ladite première zone (A) étant constituée par un premier cylindre d'axe horizontal (60) raccordé à ses extrémités aux deux parties de ladite seconde zone (B) constituées par un second (61) et un troisième (62) cylindres coaxiaux et de même diamètre, inférieur au diamètre dudit premier cylindre, la génératrice inférieure des trois cylindres étant sensiblement commune.

4. Dégazeur selon l'une des revendications 1 à 3, caractérisé en ce que le dispositif de dégazage se divise en deux éléments situés respectivement de part et d'autre de ladite boîte (16) de distribution de vapeur.

5. Dégazeur selon l'une des revendications 1 à 3, caractérisé en ce que le bac (24) est suspendu à des renforts internes circulaires (25) de l'enceinte.


## Ansprüche

1. Speisewasserentgaser eines Dampferzeugers mit einer einzigen Hülle (1), die eine Entgasungseinrichtung enthält, dadurch gekennzeichnet, daß die Hülle in zwei Längszonen (A, B) unterteilt ist, von denen die eine erste Zone (A) genannt wird und der Lage der Entgasungseinrichtung entspricht sowie eine größere Querschnittsfläche besitzt als die andere Zone, zweite Zone (B) genannt, wobei der Schwerpunkt (G1) des Querschnitts der ersten Zone relativ zu demjenigen (G2) der zweiten Zone nach oben versetzt ist und der obere Abschnitt der ersten Zone mit Austrittsöffnungen (15) für die nichtkondensierbaren Gase, mit Zerstäubungsdüsen (17) für das zu entgasende und zu erwärmende Wasser und mit einer Zuleitung für den Heizdampf versehen ist, die in einer Dampfverteilungskammer (16) in längsgerichtete Durchgänge (28, 29) mündet, die in einem länglichen, an den Wänden der ersten Zone (A) der Hülle aufgehängten Becken (24) angeordnet sind, wobei das Becken (24) in einem zentralen, längsgerichteten Gang (23) mit Wasser aus den Düsen (17) versorgt wird und das Wasser durch untere Öffnungen (30, 31) der Wände (26, 27) der Durchgänge in die Durchgänge (28, 29) eindringt, die zu beiden Seiten des Ganges (23) angeordnet sind, wobei das Wasser und der Dampf anschließend von den Durchgängen (28, 29) durch perforierte Wände (32, 33) in äußere Gänge (36, 37) übertritt und in diesen äußeren Gängen eine Wasser-Dampf-Mischung herbeiführt, die sich schließlich über die Längsränder (38, 39) des Beckens (24) in der gesamten Länge in die Hülle ergießt.

2. Entgaser nach Anspruch 1, dadurch gekennzeichnet, daß sich die zweite Zone (B) in zwei die erste Zone (A) umrahmende Abschnitte aufteilt, wobei die beiden Zonen einen einzelnen, zylindrischen Speicherbehälter (2) mit waagrechter Achse bilden, der an seinen beiden Enden geschlossen ist und dessen mittlerer Abschnitt in seinem oberen Teil eine Längsöffnung aufweist, an deren Rändern ein Abschnitt eines Zylindermantels (3) unter Bildung eines Doms angeschweißt ist, dessen Durchmesser kleiner als der des Behälters ist, wobei die erste Zone (A) durch diesen mittleren Abschnitt mit seinem Mantel (3) gebildet wird.

3. Entgaser nach Anspruch 1, dadurch gekennzeichnet, daß die zweite Zone (B) in zwei die erste Zone (A) umrahmende Abschnitte unterteilt ist, wobei die beiden Zonen einen gemeinsamen, an seinen beiden Enden (5, 6) geschlossenen Speicherbehälter (2) bilden und die erste Zone (A) aus einem ersten Zylinder (60) mit waagrechter Achse besteht, der an seinen Enden an die beiden Abschnitte der zweiten Zone (B) angeschlossen ist, die aus einem zweiten (61) und einem dritten koaxialen Zylinder (62) gleichen Durchmessers bestehen, wobei dieser Durchmesser kleiner als der Durchmesser des ersten Zylinders ist und die untere Erzeugende der drei Zylinder im wesentlichen allen gemeinsam ist.

4. Entgaser nach einem der Ansprüche 1 bis 3, dadurch gekennzeichnet, daß sich die Entgasereinrichtung in zwei Elemente unterteilt, die zu beiden Seiten der Dampfverteilungskammer (16) angeordnet sind.

5. Entgaser nach einem der Ansprüche 1 bis 3, dadurch gekennzeichnet, daß das Becken (24) an inneren ringförmigen Verstärkungen (25) der Mülle aufgehängt ist

**Claims**

1. A degasser for degassing the feed water of a steam generator, the degasser comprising a single enclosure (1) including a degassing device, characterized in that said enclosure is divided into two longitudinal zones (A, B) with a first one of said zones (A) corresponding to the location of said degassing device, said first zone (A) having a cross-section which is larger in area than the cross-section of the second one of said zones (B), the center of gravity (G1) of said cross-section of said first zone being higher than the center of gravity (G2) of the cross-section of said second zone, the top portion of said first zone being provided with escape orifices (15) for the incondensables, with nozzles (17) for spraying the water to be degassed and reheated, and with a reheat steam inlet (14) leading to a steam distribution chest (16) for distributing steam into longitudinal passages (28, 29) situated in an elongate basin (24) suspended from the walls of said first zone (A) of the enclosure, said basin (24) being fed in a central longitudinal alley (23) with water from said nozzles (17), said water entering said passages (28, 29) situated on either side of said alley (23) via bottom orifices (30, 31) through the walls (26, 27) of said passages, the water and the steam then passing from said passages (28, 29) into outside alleys (36, 37) via perforated walls (32, 33) causing the water and the steam to mix in said outside alleys, said mixture finally pouring into the enclosure over the entire length of the longitudinal edges (38, 39) of the basin (24).

2. A degasser according to claim 1, characterized in that said second zone (B) is split into two portions on either side of said first zone (A), said two zones constituting a single horizontal axis cylindrical storage container (2) which is closed at both ends, with the central portion thereof having an elongate opening in its top portion with a dome-forming cylindrical barrel portion (3) welded to the edges of said elongate opening, said barrel being of smaller diameter than said container, said first zone (A) being constituted by said central portion including its barrel (3).

3. A degasser according to claim 1, characterized in that said second zone (B) is split into two portions on either side of said first zone (A), with the two zones constituting a single storage container (2) which is closed at both ends (5, 6), said first zone (A) being constituted by a first horizontal axis cylinder (60) connected at its ends to the two portions of said second zone (B) which is constituted by second and third coaxial and cylinders (61, 62) of equal diameters, smaller than the diameter of said first cylinder, with the bottom generator line of all three cylinders being substantially common.

4. A degasser according to one of claims 1 to 3, characterized in that the degassing device is split into two parts situated on either side of said steam distribution chest (16).

5. A degasser according to any one of claims 1 to 3, characterized in that the basin (24) is suspended from circular internal reinforcing ribs (25) of the enclosure.

FIG.1

FIG.2

EP 0 285 124 B1

# FIG.3

EP 0 285 124 B1

# FIG.4

# FIG.5

FIG.6

FIG.7

EP 0 285 124 B1